# EUROPÄISCHE PATENTSCHRIFT

(11) **EP 2 018 518 B1**
(45) Veröffentlichungstag und Bekanntmachung des Hinweises auf die Patenterteilung: **14.10.2009**
(21) Anmeldenummer: 07725340.9
(22) Anmeldetag: 16.05.2007
(51) Int. Cl.: G01D 5/04, B62D 15/00

(54) **WINKELSENSOR**
ANGLE SENSOR
CAPTEUR ANGULAIRE

(30) Priorität: 18.05.2006 DE 102006023286
(43) Veröffentlichungstag der Anmeldung: 28.01.2009
(73) Patentinhaber: Leopold Kostal GmbH & Co. KG, 58513 Lüdenscheid (DE)
(72) Erfinder: SCHIRP, Christian, 58454 Witten (DE); RÜBENHAGEN, Arndt, 46537 Dinslaken (DE); MAIER, Oliver, 57439 Attendorn (DE)
(74) Vertreter: Kerkmann, Detlef
(86) Internationale Anmeldenummer: PCT/EP2007/004430
(87) Internationale Veröffentlichungsnummer: WO 2007/134801

(56) Entgegenhaltungen:
- EP-A- 1 132 716
- DE-A1-102004 021 405
- US-A- 3 396 594

## Beschreibung

Die Erfindung betrifft einen Winkelsensor mit einem Winkelmeßbereich oberhalb einer vollständigen Umdrehung, insbesondere für ein Kraftfahrzeug, mit einem Antriebsritzel und zwei angetriebenen Meßritzeln, wobei aus der Stellung der beiden Meßritzel die Anzahl der vollständigen Umdrehungen des Antriebsritzels ermittelbar ist.

Aus der EP 0 877 916 B1 sind Sensoren bekannt, die über ein mit der Lenksäule verbundenes Antriebsritzel zwei kleinere Ritzel mit unterschiedlicher Zahnzahl antreiben und über die Auswertung des Schwebungswinkels nach dem Noniusprinzip die absolute Winkelstellung der Lenksäule in einem 360° überschreitenden Meßbereich bestimmen. Bei einer getrieblichen Ankopplung der Sensoren an die eigentliche Meßgröße kommt es durch das unvermeidliche Zahnspiel zu einer gewissen Hysterese. Bekannt ist es, dieses Spiel z. B. durch den Einsatz von Fett zu reduzieren. Allerdings ist die Spielfreiheit über Temperatur und Lebensdauer damit nicht zu garantieren.

Aus der EP 1 132 716 A1 ist eine Sensorausführung bekannt, die die Meßritzel über eine federnde Lagerung spielfrei an das Antriebsritzel koppelt; ähnlich verhält es sich bei der Anordnung nach EP 1 391 696 A2. Die erste Anordnung erkauft sich die Hysteresefreiheit mit einem höheren Meßfehler, da die Meßritzel und damit deren Achse, an die das Geberelement gekoppelt ist, dabei relativ zur Sensorachse verschoben werden. Bei der zweiten Lösung kann sich über die indirekte Ankoppelung der Meßritzel ein Sicherheitsproblem ergeben, da durch die Nachgiebigkeit der Ankoppelung Zähne übersprungen werden können.

Es war die Aufgabe der Erfindung, auf einfache und kostengünstige Weise einen hysteresearmen Winkelsensor zu schaffen, der die vorgenannten Nachteile vermeidet.

Diese Aufgabe wird erfindungsgemäß dadurch gelöst, daß zwischen die Meßritzel ein, zwei koaxial angeordnete Zahnkränze umfassendes Deltarad eingefügt ist, daß die beiden Zahnkränze, mit jeweils einem der Meßritzel in Eingriff sind und daß die Zahnkränze nur unter Kraftaufwand gegeneinander beweglich sind.

Durch das Deltarad werden die Zähne der beiden Meßritzel ständig gegen entgegengesetzte Zahnflanken des Antriebsritzels gedrückt, wodurch ein Zahnspiel verhindert wird. Die Zahnkränze des Deltarads sind hierzu mittels einer Viskose-, Reib- oder Magnetkupplung oder einer spannbaren Feder miteinander verbunden.

Weitere vorteilhafte Ausgestaltungen und Weiterbildungen sind in den abhängigen Ansprüchen angeführt. Ein Ausführungsbeispiel der Erfindung ist in der Zeichnung dargestellt und wird im folgenden anhand der Zeichnung näher erläutert.

Es zeigen
- Figur 1: den prinzipiellen Aufbau einer Zahnradanordnung,
- Figur 2: die Darstellung eines Deltarads.

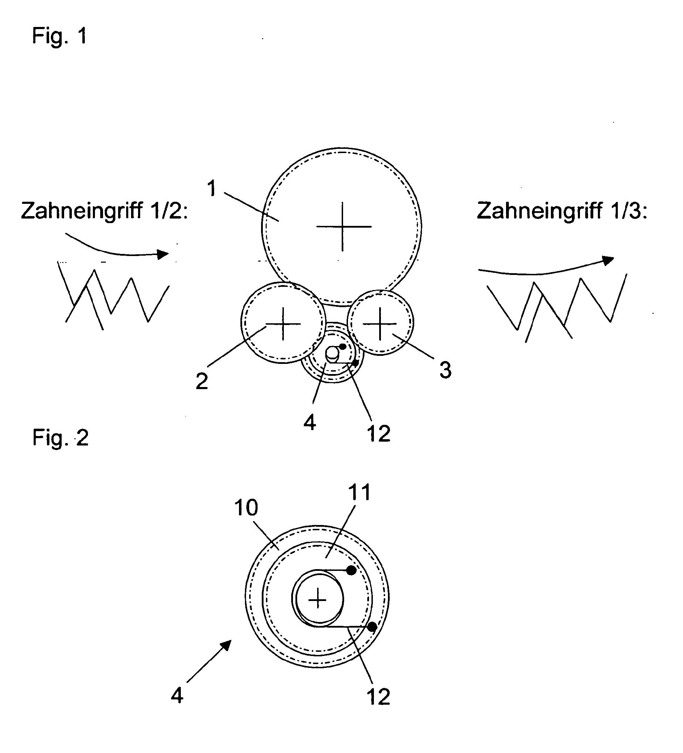

In der Figur 2 ist eine mögliche Ausführung eines sogenannten Deltarads (4) schematisch dargestellt. Dieses umfaßt zwei zueinander koaxial angeordnete, gegeneinander verdrehbare Zahnkränze (10, 11), die eine unterschiedliche Anzahl von Zähnen aufweisen.

Die beiden Zahnkränze (10, 11) sind durch eine Feder (12) miteinander verbunden, die durch eine Verdrehung der Zahnkränze (10, 11) gegeneinander gespannt werden kann. Vorteilhaft ist es, an den Zahnkränzen (10, 11) in der Figur nicht dargestellte Anschläge vorzusehen, die den Drehbereich der Zahnkränze begrenzen, so daß ein Überspannen und damit eine Zerstörung der Feder (12) vermieden wird.

Alternativ können die Zahnkränze auch über Reibkupplungen miteinander verbunden sein.

Die Verwendung des so gebildeten Deltarads (4) bei einem Winkelsensor ist schematisch in der Figur 1 dargestellt. Der Winkelsensor umfaßt ein Antriebsritzel (1), welches an einen drehbeweglichen Gegenstand gekoppelt ist, dessen Winkeländerung bestimmt werden soll. Dies kann beispielsweise die Lenksäule eines Kraftfahrzeugs zur Erfassung eines Lenkwinkels sein.

Mit den Zähnen des Antriebsritzels (1) in Eingriff stehen zwei Meßritzel (2, 3), deren Drehachsen parallel zur Drehachse des Antriebsritzels (1) stehen. Mit den Meßritzeln (2, 3) verbunden sind nicht dargestellte elektronische Sensoren zur Erfassung der Winkelpositionen bzw. von Winkelpositionsänderungen innerhalb des Bereichs einer Umdrehung eines Meßritzels (2, 3).

Wesentlich ist, daß die Ankopplungen der Meßritzel (2, 3) an das Antriebsritzel (1) mit unterschiedlichen Übersetzungen erfolgen, vorzugsweise, indem die Meßritzel (2, 3) eine unterschiedliche Anzahl von Zähnen aufweisen, und daher bei einer Drehung des Antriebsritzels (1) um verschiedene Drehwinkel mitgeführt werden. Aus den ermittelten Winkelstellungen beider Meßritzel (2, 3) kann die Winkeländerung des Antriebsritzels (1) nach einem sogenannten Nonius-Prinzip über mehrere Umdrehungen eindeutig bestimmt werden.

Derartige Auswerteverfahren sind aus dem Stand der Technik bekannt und daher nicht Gegenstand dieser Anmeldung. Zu lösen war vielmehr das Problem, daß die erzielbare Genauigkeit bei der Positionsbestimmung durch das Spiel beim Eingriff der Meßritzel (2, 3) in die Verzahnung des Antriebsritzels (1) verringert wird. Toleranzen bei den Maßen der Verzahnung müssen vorgesehen werden, um ein Verklemmen der Zahnräder zu vermeiden. Da beide Meßritzel (2, 3) im Zusammenwirken mit dem Antriebsritzel (1) ein Zahnspiel aufweisen, vergrößert sich der mögliche Fehler entsprechend.

Die Lösung dieses Problems besteht darin, daß das zuvor beschriebene Deltarad (4) zwischen die Meßritzel (2, 3) eingefügt ist, wobei jeweils einer der Zahnkränze (10, 11) des Deltarads (4) mit der Verzahnung jeweils eines der Meßritzel (2, 3) zusammenwirkt.

Durch die mittels der Feder (12) gegeneinander vorgespannten Zahnkränze (10, 11) des Deltarads (4) werden die Zähne der beiden Meßritzel (2, 3) gegen entgegengesetzte Zahnflanken des Antriebsritzels (1) gedrückt. Bei einer Drehrichtungsumkehr ist durch diese Spannung kein Zahnflankenspiel vorhanden und damit auch keine Hysterese. Die Feder (12) besitzt idealerweise über den gesamten Meßbereich eine Vorspannung.
Zur Erläuterung sei beispielhaft folgende Auslegung der Zahnräder angenommen:

| | |
|---|---|
| Antriebsritzel (1) | 87 Zähne |
| Meßritzel (2) | 29 Zähne |
| Meßritzel (3) | 30 Zähne |

### Deltarad (4):

| | |
|---|---|
| Zahnkranz (10), im Eingriff mit Meßritzel (3) | 29 Zähne |
| Zahnkranz (11), im Eingriff mit Meßritzel (2) | 30 Zähne |

Bei einer Drehung des Antriebsritzels (1) um 5 Umdrehungen wird das Meßritzel 2 um volle 15 Umdrehungen mitgeführt, das Meßritzel 3 wegen seiner um 1 größeren Anzahl von Zähnen um 14,5 Umdrehungen. Aus diesem Unterschied bestimmt eine den Meßritzeln (2, 3) zugeordnete Meßelektronik die Umdrehungszahl des Antriebsritzels (1).

Gleichzeitig werden die beiden Zahnkränze (10, 11) des Deltarads (4) von jeweils einem der Meßritzel (2, 3) angetrieben, wobei beide Zahnkränze (10, 11) des Deltarads (4) in die gleiche Drehrichtung bewegt werden und der Zahnkranz 10 dem Zahnkranz 11 um eine halbe Umdrehung vorauseilt. Hierdurch wird die Feder (12) zwischen den Zahnkränzen (10, 11) gespannt. Die Rückwirkung der Federkraft auf die Meßritzel (2, 3) erzeugt an diesen ein Drehmoment, welches die Zähne der Meßritzel (2, 3) gegen entgegengesetzt liegende Zahnflanken des Antriebsritzels (1) preßt.

Ein Verdrehwinkel in der Größenordnung einer halben Umdrehung, läßt sich über eine Feder (12) gut ausgleichen. Um ein Überdrehen der Feder (12) und damit eine Zerstörung des Winkelsensors zu verhindern, sind an das Deltarad (4), in der Figur nicht dargestellte, Anschläge angefügt, die den Verdrehwinkel begrenzen. Bei der alternativen Verwendung eines Reibkupplungselements bedarf es keines solchen Überdrehschutzes.

Die erfindungsgemäße Ausgestaltung eines Winkelsensors mit einem Deltarad (4) beschränkt sich nicht auf Auslegungen mit unterschiedlichen Meßritzeln (2, 3) und einem Zahnkranz am Antriebsritzel (1), sondern ermöglicht auch Ausführungen mit gleich großen Meßritzeln und einem Antriebsritzel mit zwei Zahnkränzen sowie auch der Kombination aus unterschiedlichen Meßritzeln und einem Antriebsritzel mit zwei Zahnkränzen.

Darüber hinaus sind Anordnungen vorstellbar, bei denen die beiden Meßritzel indirekt über einen Schneckentrieb angetrieben werden.

### Bezugszeichen

- 1: Antriebsritzel
- 2,3: Meßritzel
- 4: Deltarad
- 10, 11: Zahnkränze
- 12: Feder

## Patentansprüche

1. Winkelsensor mit einem Winkelmeßbereich oberhalb einer vollständigen Umdrehung, insbesondere für ein Kraftfahrzeug, mit einem Antriebsritzel und zwei angetriebenen Meßritzeln, wobei aus der Stellung der beiden Meßritzel die Anzahl der vollständigen Umdrehungen des Antriebsritzels ermittelbar ist,
**dadurch gekennzeichnet,**
**daß** zwischen die Meßritzel (2, 3) ein, zwei koaxial angeordnete Zahnkränze (10, 11) umfassendes Deltarad (4) eingefügt ist, daß die beiden Zahnkränze (10, 11) mit jeweils einem der Meßritzel (2, 3) in Eingriff sind und daß die Zahnkränze (10, 11) nur unter Kraftaufwand gegeneinander beweglich sind.

2. Winkelsensor nach Anspruch 1, **dadurch gekennzeichnet, daß** die Zahnkränze (10, 11) des Deltarads (4) mittels einer Viskose-, Reib- oder Magnetkupplung miteinander verbunden sind.

3. Winkelsensor nach Anspruch 1, **dadurch gekennzeichnet, daß** die Zahnkränze (10, 11) des Deltarads (4) über eine Feder (12) verbunden sind.

4. Winkelsensor nach Anspruch 3, **dadurch gekennzeichnet, daß** die Feder (12) über den gesamten Meßbereich eine Vorspannung aufweist.

5. Winkelsensor nach Anspruch 1 oder 3, **dadurch gekennzeichnet, daß** das Deltarad (4) Anschläge zur Begrenzung des Verdrehwinkels der beiden Zahnkränze (10, 11) gegeneinander aufweist.

6. Winkelsensor nach Anspruch 1, **dadurch gekennzeichnet, daß** die Zahnkränze (10, 11) des Deltarads (4) eine unterschiedliche Anzahl von Zähnen aufweisen.

7. Winkelsensor nach Anspruch 1, **dadurch gekennzeichnet, daß** die beiden Meßritzel (2, 3) indirekt über einen Schneckentrieb angetrieben werden.

8. Winkelsensor nach Anspruch 1, **dadurch gekennzeichnet, daß** das Antriebsritzel zwei miteinander verbundene Zahnkränze aufweist und die beiden Meßritzel (2, 3) mit jeweils einem Zahnkranz des Antriebsritzels im Eingriff sind.

9. Winkelsensor nach Anspruch 1, **dadurch gekennzeichnet, daß** der Winkelsensor einen Lenkwinkelsensor in einem Kraftfahrzeug ausbildet.

## Claims

1. Angle sensor, in particular for a motor vehicle, with an angular measuring range exceeding one complete rotation and with a drive pinion and two driven measuring pinions, whereby the number of complete rotations of the drive pinion can be ascertained from the position of the two measuring pinions,
**characterised by the fact**
that a delta wheel (4) comprising two coaxially arranged gear rings (10, 11) is inserted between the measuring pinions (2, 3), that each of the two gear rings (10, 11) engages with one of the measuring pinions (2, 3), and that the gear rings (10, 11) can only be moved against each other by applying force.

2. Angle sensor in accordance with Claim 1, **characterised by** the fact that the gear rings (10, 11) of the delta wheel (4) are connected to each other by means of a viscous, a friction or a magnetic coupling.

3. Angle sensor in accordance with Claim 1, **characterised by** the fact that the gear rings (10, 11) of the delta wheel (4) are connected by means of a spring (12).

4. Angle sensor in accordance with Claim 3, **characterised by** the fact that the spring (12) shows an initial bias over the entire measuring range.

5. Angle sensor in accordance with Claim 1 or Claim 3, **characterised by** the fact that the delta wheel (4) has limit stops for restricting the torsion angle of the two gear rings (10, 11) towards each other.

6. Angle sensor in accordance with Claim 1, **characterised by** the fact that the gear rings (10, 11) of the delta wheel (4) possess a different number of teeth.

7. Angle sensor in accordance with Claim 1, **characterised by** the fact that the two measuring pinions (2, 3) are indirectly driven by means of a worm gear drive.

8. Angle sensor in accordance with Claim 1, **characterised by** the fact that the drive pinion possesses two interconnected gear rings and each of the two measuring pinions (2, 3) engages with a gear ring of the drive pinion.

9. Angle sensor in accordance with Claim 1, **characterised by** the fact that the angle sensor constitutes a steering angle sensor in a motor vehicle.

## Revendications

1. Capteur d'angle avec une plage de mesure d'angle supérieure à une rotation complète, en particulier pour un véhicule automobile, avec une roue d'entraînement et deux roues mesureuses entraînées, le nombre des rotations complètes de la roue d'entraînement étant déterminé à partir de la position des deux roues mesureuses, **caractérisé en ce que,** entre les roues mesureuses (2, 3), est insérée une roue delta (4), qui comprend deux couronnes dentées (10, 11), disposées coaxialement, que chacune des deux couronnes dentées (10, 11) est respectivement en prise avec l'une des roues mesureuses (2, 3), et que les couronnes dentées (10, 11) ne peuvent être déplacées l'une par rapport à l'autre que par application d'une force.

2. Capteur d'angle selon la revendication 1, **caractérisé en ce que** les couronnes dentées (10, 11) de la roue delta (4) sont reliées ensemble au moyen d'un coupleur viscostatique, à friction ou magnétique.

3. Capteur d'angle selon la revendication 1, **caractérisé en ce que** les couronnes dentées (10, 11) de la roue delta (4) sont reliées par l'intermédiaire d'un ressort (12).

4. Capteur d'angle selon la revendication 3, **caractérisé en ce que** le ressort (12) présente une précontrainte sur la totalité de la plage de mesure.

5. Capteur d'angle selon revendication 1 ou 3, **caractérisé en ce que** la roue delta (4) présente des butées pour la limitation de l'angle de déplacement des deux couronnes dentées (10, 11) l'une par rapport à l'autre.

6. Capteur d'angle selon la revendication 1, **caractérisé en ce que** les couronnes dentées (10, 11) de la roue delta (4) présentent un nombre de dents différent.

7. Capteur d'angle selon la revendication 1, **caractérisé en ce que** les deux roues mesureuses (2, 3) sont entraînées indirectement par l'intermédiaire d'un engrenage à vis sans fin.

8. Capteur d'angle selon la revendication 1, **caractérisé en ce que** la roue d'entraînement présente deux couronnes dentées reliées l'une avec l'autre, et que chacune des deux roues mesureuses (2, 3) est respectivement en prise avec une couronne dentée de la roue d'entraînement.

9. Capteur d'angle selon la revendication 1, **caractérisé en ce que** ledit capteur d'angle forme un capteur d'angle de braquage dans un véhicule automobile.
